# EUROPEAN PATENT SPECIFICATION

(11) **EP 3 415 294 B1**
(45) Date of publication and mention of the grant of the patent: **18.11.2020**
(21) Application number: 18177183.3
(22) Date of filing: 12.06.2018
(51) Int. Cl.: B27L 7/00, B27L 7/06

(54) **FIREWOOD PROCESSOR COMPRISING A SPLITTING BLADE STRUCTURE**
BRENNHOLZVERARBEITER MIT SPALTMESSERVORRICHTUNG
PROCESSEUR DE BOIS AVEC ASSEMBLAGE D'UNE LAME DE FENDAGE

(30) Priority: 13.06.2017 FI 20175546
(43) Date of publication of application: 19.12.2018
(73) Proprietor: Agromaster Oy, 54710 Lemi (FI)
(72) Inventor: Pitkäniemi, Tarmo, 54710 Lemi (FI)
(74) Representative: Papula Oy

(56) References cited:
- EP-A2- 0 901 892
- WO-A1-2011/141636
- DE-A1-102013 019 707
- DE-U1- 9 104 938
- SE-A1- 1 330 018
- US-A- 4 371 019
- US-A- 4 961 452
- US-A- 5 337 810

## Description

### FIELD OF THE INVENTION

The invention relates to a firewood processor according to the preamble of claim 1, and specifically to an arrangement in connection with its splitting blade.

### BACKGROUND OF THE INVENTION

Splitting blades used in firewood processors are knife-type blades through which a length of wood cut from a log is pushed with a splitting cylinder, such that the length of wood splits into two or more parts, depending on the structure of the blade. When the splitting blade has, in addition to a vertical blade, also crosswise splitting blades, the level of the blade is an important factor in the splitting operation, i.e. the blade must be adjustable along its full height according to the diameter of the log being split, in order that the log will split into roughly equal-sized pieces of firewood. The adjustment may be carried out manually with a mechanical lever, but more and more with mechanical linkages that take their control from the surface of the log being processed, and accordingly lift or lower the splitting blade to a suitable level.

Most often the splitting blade is supported to the frame of the firewood processor from its lower end, and its adjustment linkage is coupled to the upper part of the splitting blade. With a fast work pace, the measurement and cutting of the log, splitting of the length of wood, and adjustment of the level of the splitting blade are fast, continuous and partly overlapping, i.e. simultaneous operations. As a result, the splitting blade is subject in wood-splitting to forward-turning forces which, on the one hand in its support structures at the lower end, hinder the vertical movement of the blade, and on the other hand at the upper end of the splitting blade, apply pulling forces on the adjustment linkage, and thus hinder the operation of the adjustment linkage. There are also known structures in which the adjustment linkage is made robust enough to receive the turning forces applied on the splitting blade. In any case the splitting blade must in the known structures be manufactured from a thick material, so that it withstands the high turning forces in splitting.

From US 4961452 and US 4371019 are known splitting devices with splitting blades. US 4 961 452 A discloses a firewood processor according to the preamble of claim 1.

### OBJECT OF THE INVENTION

The object of the invention is to remedy the defects of the prior art mentioned above. Specifically, the object of the invention is to disclose a new arrangement in a firewood processor, where the pressing forces applied on the splitting blade in connection with wood-splitting will not turn the splitting blade and thereby prevent its free vertical adjusting movement. Further, the object of the invention is to enable accurate and sensitive measurement of the thickness of the log and, on that basis, adjustment of the splitting blade so that the measuring and adjusting operation is unaffected by external disturbing forces.

### SUMMARY OF THE INVENTION

The invention provides a firewood processor according to claim 1, comprising a a splitting blade structure for the firewood processor. The firewood processor comprises a frame and a vertical, straight and knife-type splitting blade supported to the frame, and at least one non-vertical cross-blade supported to the splitting blade. In addition, the firewood processor has a measuring device for the thickness of a log being processed, connected to the vertical splitting blade for lifting and lowering it according to the thickness of the log. According to the invention the vertical splitting blade comprises three parts, a lower support part, an upper support part, and a splitting part between them, to which splitting part one or more cross-blades are attached. Accordingly, the frame of the firewood processor comprises a lower support sleeve and an upper support sleeve with cross-sections substantially corresponding to the elongated lower support part and upper support part, on which sleeves the splitting blade is movable. The lower support sleeve and the upper support sleeve with cross-sections are sized to correspond to the lower support part and upper support part such that the lower and upper support parts are able to freely move in vertical direction. The splitting blade structure comprises an adjustment linkage which is connected to the measuring device, and the adjustment linkage is connected to an upper end of the upper support part for lifting and lowering the splitting blade. Thus, the splitting blade is secured and supported only from its knife-type and vertical central part, however both from its upper part and its lower part, to the frame of the firewood processor. As the splitting forces are thus applied between the two support areas of the splitting blade, the splitting blade will not be subject to turning forces that would hinder its vertical movement in the support sleeves.

In one embodiment of the invention the upper edge of the upper support part of the splitting blade is provided with a hole, a slot or another fitting to which the adjustment linkage of the measuring device is connected for lifting and lowering the splitting blade.

Most appropriately the adjustment linkage is connected to the splitting blade only through a vertical path of movement, so that the horizontal splitting forces are not applied on the adjustment linkage and thereby on the thickness measuring device. To this end, horizontal slots and/or vertical suspensions that do not transmit horizontal forces may be used.

Preferably the upper support sleeve and the lower support sleeve comprise vertically aligned, corresponding slide surfaces to which the splitting blade is supported. Accordingly, the upper support sleeve and the lower support sleeve are suitably rectangles in cross-section, the width of which corresponds to the thickness of the splitting blade, and the length of which corresponds to the width of the splitting blade in the direction of movement of the log being split.

In one embodiment of the invention the upper support sleeve and the lower support sleeve comprise straight back support surfaces that receive the pressing force of the splitting piston applied on the splitting blade during splitting of the log. Thus, the straight back surface of the knife-type and vertical splitting blade opposite to the splitting edge is supported to said back support surfaces.

Further, parallel side support surfaces are also suitably arranged in the upper support sleeve and the lower support sleeve, extending in the same direction as the side surfaces of the splitting blade to receive the transversal and turning forces applied on the splitting blade.

In one embodiment of the invention the upper support sleeve and the lower support sleeve are sized loosely around the upper support part and the lower support part of the splitting blade to allow free vertical movement of the splitting blade, but to prevent the splitting blade from turning and getting stuck in the support sleeves. The loose sizing of 1-2 mm ensures that impurities will not stick to the surfaces to prevent movement of the splitting blade, and that no separate lubrication is needed for the surfaces.

### ADVANTAGES ACHIEVED WITH THE INVENTION

The splitting blade structure for a firewood processor provides significant advantages over the prior art. When the splitting blade is supported according to the invention from two points in the vertical direction and the splitting forces act on the splitting blade in the area between these support points, all splitting force effects will be directed to these two support points. This ensures that the vertical adjusting movement of the splitting blade is free and undisturbed in all conditions. It also allows for a sensitive and lightweight adjustment linkage for carrying out the adjustment of the level of the splitting blade. Further, the invention allows for a lighter and thinner splitting blade structure, as only perpendicular and no turning forces are applied on the blade.

### SHORT DESCRIPTION OF THE DRAWINGS

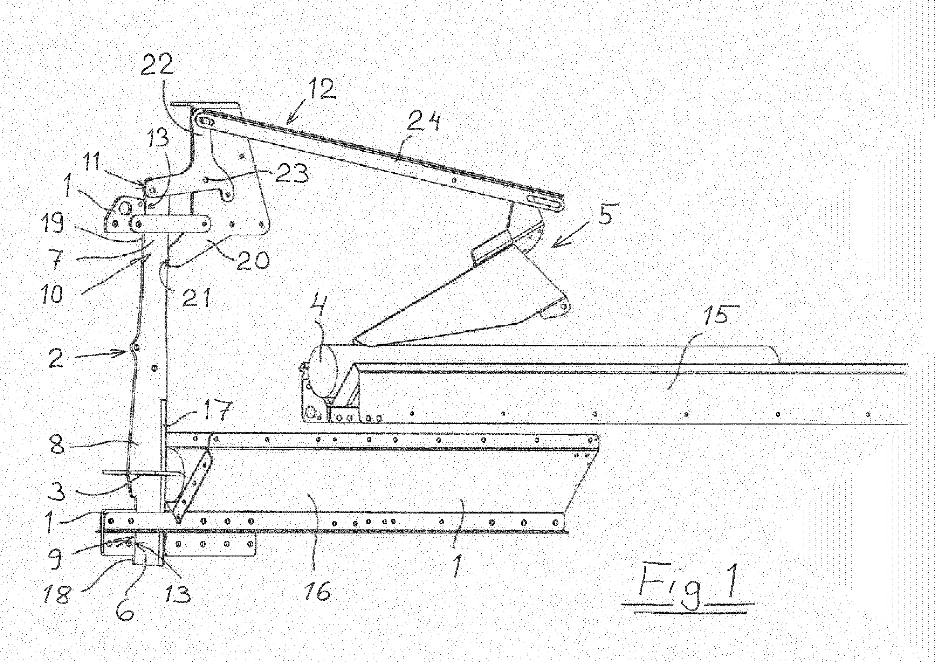

The invention will now be described in detail with reference to the accompanying drawings, in which Fig. 1 is a schematical illustration of relevant parts of one firewood processor according to the invention, and

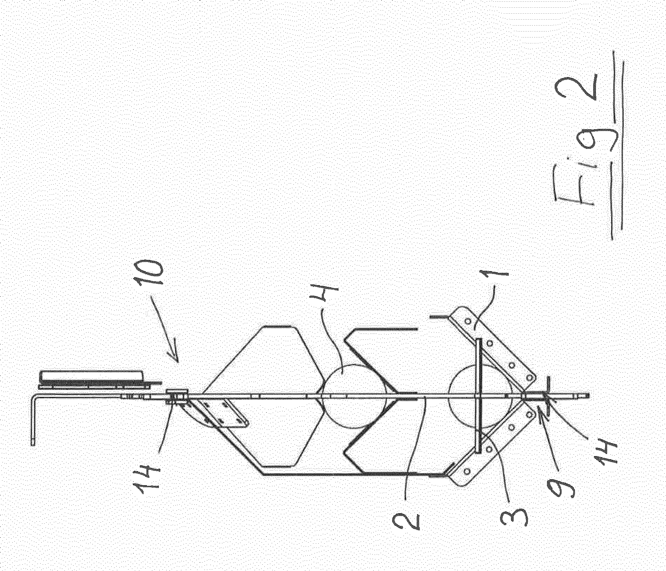

Fig. 2 shows the firewood processor of Fig. 1 from another angle.

### DETAILED DESCRIPTION OF THE INVENTION

One firewood processor according to the invention illustrated in Fig. 1 and 2 comprises a frame 1, only a part of which is shown in the figures for clarity purposes. Supported to the frame there is a feeding device, i.e. a feeding trough 15, for feeding a log 4 being processed, and a splitting trough 16 for pushing a length of log cut through a splitting blade. The power supply unit or cutting device for performing these operations are not illustrated in the figures.

The splitting blade 2 is a long, vertical, knife-type structure having a lower support part 6 for supporting it to the frame 1. In addition, it has an upper support part 7 also for supporting it to the frame 1. A splitting part 8, the forward side of which is provided with a splitting edge 17 forming the actual splitting blade, is disposed in the middle of said support parts. Further, the splitting blade 2 comprises as an integral part of it in the area of the splitting part 8, i.e. at the splitting edge 17, a cross-blade 3. The cross-blade is in this embodiment a horizontal blade that divides the blade into a cross-shaped structure, such that the length of wood pushed through it is divided into four segments.

More specifically, the splitting blade 2 is supported from the lower support part 6 to the frame 1 of the firewood processor, to a lower support sleeve 9 of the frame. The lower support sleeve is formed by a vertical opening, substantially corresponding to the cross-section of the lower support part, in which the lower support part is able to freely move in the vertical direction. It is provided with a back support surface 13 against which a back surface 18 of the lower support part 6 is pressed when a splitting force of the splitting cylinder is applied on the splitting blade. It is also provided with side support surfaces 14 illustrated more clearly in Fig. 2, between which the splitting blade in maintained aligned.

In a corresponding manner, the splitting blade 2 is supported from the upper support part 7 to the frame 1 of the firewood processor, to an upper support sleeve 10 of the frame. The upper support sleeve is formed by a vertical opening, substantially corresponding to the cross-section of the upper support part, in which the upper support part is able to freely move in the vertical direction. It is provided with a back support surface 13 against which a back surface 19 of the upper support part 7 is pressed when a splitting force of the splitting cylinder is applied on the splitting blade. It is also provided with side support surfaces 14 illustrated more clearly in Fig. 2, between which the splitting blade in maintained aligned. In addition, one of the frame elements 20 comprises a support surface 21 supporting the front edge of the upper support part 7. Thus, the splitting blade 2 is fully supported in the horizontal direction, and is able to move in the lower support sleeve 9 and in the upper support sleeve 10 in the vertical direction only.

From the upper edge of the splitting blade 2, i.e. the upper end of the upper support part 7, the splitting blade is coupled to an adjustment linkage 12 connected to a measuring device 5 for measuring the thickness of the log 4. A fitting, i.e. a transversal slot 11 to which a pivoted lever 22 is supported, is provided at the upper end of the splitting blade. The pivoted lever 22 is hinged from a fulcrum 23 to the frame 1, such that longitudinal movement of an adjustment lever 24 turns the pivoted lever. The adjustment lever, in turn, is connected from one end to the log thickness measuring device 5, i.e. a lever structure following the upper surface of the log. Thus, as log thickness varies, the above-mentioned lever structure lifts and lowers the splitting blade 5, always centring the central point of the crossed configuration of the splitting blade to the centre of the length of log being split.

The essential feature of this structure is that the forces applied for splitting a length of log and the forces applied for adjusting the splitting blade are completely separated from each other. The wood-pressing and splitting forces of the splitting cylinder and the splitting piston are received 100 % to the frame 1 of the firewood processor in the lower support sleeve 9 and the upper support sleeve 10. However, adjustment of the level of the splitting blade 2 is carried out only by vertical forces applied on it, i.e. the measuring device 5 and its associated adjustment linkage 12 lift and lower the splitting blade 2 only with forces acting in the vertical direction. The fitting 11, i.e. the horizontal slot, does not support the pivoted lever 22 in the upper part of the splitting blade 2 in the horizontal direction, so only vertical movement of the pivoted lever is transmitted to the splitting blade.

As the horizontal and vertical forces are separated in the structure of the firewood processor according to the invention, the forces may be controlled and adjusted with precision, which also allows for lightness and durability of the structures. Further, the splitting blade is not able to turn and become stuck, as all active forces are under precise control.

The invention has been described above by way of example with reference to the accompanying drawings; however, various embodiments of the invention are possible within the scope defined by the claims.

## Claims

1. A firewood processor comprising a splitting blade structure for the firewood processor, wherein the splitting blade structure comprises a vertical, straight and knife-type splitting blade (2) supported to a frame (1) of the firewood processor, and at least one non-vertical cross-blade (3) supported to the splitting blade, and a measuring device (5) for the thickness of a log (4) being processed in the firewood processor, connected to the vertical splitting blade for lifting and lowering it according to the thickness of the log, **characterized in that** the vertical splitting blade (2) comprises three parts, a lower support part (6), an upper support part (7), and a splitting part (8) between them, to which splitting part the cross-blade (3) is attached, whereby the frame (1) of the firewood processor comprises a lower support sleeve (9) and an upper support sleeve (10) corresponding to the elongated lower support part (6) and upper support part (7), on which sleeves the splitting blade is movable, and the lower support sleeve (9) and the upper support sleeve (10) with cross-sections are sized to correspond to the lower support part (6) and upper support part (7) such that the lower and upper support parts are able to freely move in vertical direction, and the splitting blade structure comprises an adjustment linkage (12) which is connected to the measuring device (5), and the adjustment linkage (12) is connected to an upper end of the upper support part (7) for lifting and lowering the splitting blade (2).

2. The firewood processor according to claim 1, **characterized in that** the upper edge of the upper support part (7) comprises a hole, a slot or another fitting (11) to which the adjustment linkage (12) of the measuring device (5) is connected for lifting and lowering the splitting blade.

3. The firewood processor according to claim 1 or 2, **characterized in that** the adjustment linkage (12) is connected to the splitting blade (2) only through a vertical path of movement, so that the horizontal splitting forces are not applied on the adjustment linkage and thereby on the thickness measuring device.

4. The firewood processor according to any one of claims 1-3, **characterized in that** the upper support sleeve (10) and the lower support sleeve (9) comprise vertically aligned, corresponding slide surfaces to which the splitting blade is supported.

5. The firewood processor according to any one of claims 1-4, **characterized in that** the upper support sleeve (10) and the lower support sleeve (9) are rectangles in cross-section, the width of which corresponds to the thickness of the splitting blade (2), and the length of which corresponds to the width of the splitting blade in the direction of movement of the log being split.

6. The firewood processor according to any one of claims 1-5, **characterized in that** the upper support sleeve (10) and the lower support sleeve (9) comprise a back support surface (13) that receives the pressing force of a splitting piston applied on the splitting blade during splitting of the log.

7. The firewood processor according to any one of claims 1-6, **characterized in that** the upper support sleeve (10) and the lower support sleeve (9) comprise side support surfaces (14) that receive the transversal and turning forces applied on the splitting blade (2).

## Patentansprüche

1. Brennholzbearbeitungsgerät, umfassend eine Spaltklingenstruktur für das Brennholzbearbeitungsgerät, wobei die Spaltklingenstruktur eine vertikale, gerade und messerartige Spaltklinge (2) umfasst, die an einem Rahmen (1) des Brennholzbearbeitungsgeräts getragen ist, und wenigstens eine nicht-vertikale Querklinge (3), die an der Spaltklinge getragen ist, sowie eine Messvorrichtung (5) für die Dicke eines Holzstamms (4), der in dem Brennholzbearbeitungsgerät bearbeitet wird, verbunden mit der vertikalen Spaltklinge zum Heben und Senken davon gemäß der Dicke des Holzstamms, **dadurch gekennzeichnet, dass** die vertikale Spaltklinge (2) drei Teile umfasst, einen unteren Tragteil (6), einen oberen Tragteil (7) und einen Spaltteil (8) zwischen ihnen, an welchem Spaltteil die Querklinge (3) angebracht ist, wobei der Rahmen (1) des Brennholzbearbeitungsgeräts eine untere Traghülse (9) und eine obere Traghülse (10) entsprechend dem länglichen unteren Tragteil (6) und oberen Tragteil (7) umfasst, auf weichen Hülsen die Spaltklinge bewegbar ist, und die untere Traghülse (9) und die obere Traghülse (10) mit ihren Querschnitten entsprechend dem unteren Tragteil (6) und dem oberen Tragteil (7) derart dimensioniert sind, dass das untere und das obere Tragteil in der Lage sind, sich frei in vertikaler Richtung zu bewegen, und die Spaltklingenstruktur eine Anpassungsverbindung (12) umfasst, die mit der Messvorrichtung (5) verbunden ist, und die Anpassungsverbindung (12) mit einem oberen Ende des oberen Tragteils (7) zum Heben und Senken der Spaltklinge (2) verbunden ist.

2. Brennholzbearbeitungsgerät nach Anspruch 1, **dadurch gekennzeichnet, dass** der obere Rand des oberen Tragteils (7) ein Loch, einen Schlitz oder eine andere Passung (11) umfasst, mit der die Anpassungsverbindung (12) der Messvorrichtung (5) zum Heben und Senken der Spaltklinge verbunden ist.

3. Brennholzbearbeitungsgerät nach Anspruch 1 oder 2, **dadurch gekennzeichnet, dass** die Anpassungsverbindung (12) mit der Spaltklinge (2) nur durch einen vertikalen Bewegungspfad verbunden ist, so dass die horizontalen Spaltkräfte nicht auf die Anpassungsverbindung und somit auf die Dickenmessvorrichtung ausgeübt werden.

4. Brennholzbearbeitungsgerät nach einem der Ansprüche 1 bis 3, **dadurch gekennzeichnet, dass** die obere Traghülse (10) und die untere Traghülse (9) vertikal ausgerichtete entsprechende Gleitoberflächen umfassen, an denen die Spaltklinge getragen wird.

5. Brennholzbearbeitungsgerät nach einem der Ansprüche 1 bis 4, **dadurch gekennzeichnet, dass** die obere Traghülse (10) und die untere Traghülse (9) im Querschnitt Rechtecke sind, deren Breite der Dicke der Spaltklinge (2) entspricht, und deren Länge der Breite der Spaltklinge in der Bewegungsrichtung des Holzstamms entspricht, der gespalten wird.

6. Brennholzbearbeitungsgerät nach einem der Ansprüche 1 bis 5, **dadurch gekennzeichnet, dass** die obere Traghülse (10) und die untere Traghülse (9) eine hintere Tragoberfläche (13) umfassen, die die Drückkraft eines Spaltkolbens aufnimmt, die auf die Spaltklinge während des Spaltens des Holzstamms ausgeübt wird.

7. Brennholzbearbeitungsgerät nach einem der Ansprüche 1 bis 6, **dadurch gekennzeichnet, dass** die obere Traghülse (10) und die untere Traghülse (9) Seitentragoberflächen (14) umfassen, die die auf die Spaltklinge (2) ausgeübten Quer- und Drehkräfte aufnehmen.

## Revendications

1. Tronçonneuse-fendeuse comprenant une structure de lame de fendage pour la tronçonneuse-fendeuse, dans laquelle la structure de lame de fendage comprend une lame de fendage verticale, droite et de type couteau (2) supportée sur un cadre (1) de la tronçonneuse-fendeuse, et au moins une lame transversale non verticale (3) supportée sur la lame de fendage, et un dispositif de mesure (5) pour l'épaisseur d'une bûche (4) en cours de traitement dans la tronçonneuse-fendeuse, relié à la lame de fendage verticale pour la lever et l'abaisser selon l'épaisseur de la bûche, **caractérisée en ce que** la lame de fendage verticale (2) comprend trois parties, une partie de support inférieure (6), une partie de support supérieure (7), et une partie de fendage (8) entre elles, à laquelle partie de fendage la lame transversale (3) est fixée, moyennant quoi le cadre (1) de la tronçonneuse-fendeuse comprend un manchon de support inférieur (9) et un manchon de support supérieur (10) correspondant aux partie de support inférieure (6) et partie de support supérieure (7) allongées, sur lesquels manchons la lame de fendage est mobile, et le manchon de support inférieur (9) et le manchon de support supérieur (10) avec des sections transversales sont dimensionnés pour correspondre à la partie de support inférieure (6) et à la partie de support supérieure (7) de sorte que les parties de support inférieure et supérieure puissent se déplacer librement dans la direction verticale, et la structure de lame de fendage comprend une liaison de réglage (12) qui est reliée au dispositif de mesure (5), et la liaison de réglage (12) est reliée à une extrémité supérieure de la partie de support supérieure (7) pour lever et abaisser la lame de fendage (2).

2. Tronçonneuse-fendeuse selon la revendication 1, **caractérisée en ce que** le bord supérieur de la partie de support supérieure (7) comprend un trou, une fente ou un autre raccord (11) auquel/à laquelle la liaison de réglage (12) du dispositif de mesure (5) est reliée pour lever et abaisser la lame de fendage.

3. Tronçonneuse-fendeuse selon la revendication 1 ou 2, **caractérisée en ce que** la liaison de réglage (12) est reliée à la lame de fendage (2) uniquement à travers un trajet de déplacement vertical, de sorte que les forces de fendage horizontales ne soient pas appliquées sur la liaison de réglage et par conséquent sur le dispositif de mesure d'épaisseur.

4. Tronçonneuse-fendeuse selon l'une quelconque des revendications 1 à 3, **caractérisée en ce que** le manchon de support supérieur (10) et le manchon de support inférieur (9) comprennent des surfaces de coulissement correspondantes alignées verticalement sur lesquelles la lame de fendage est supportée.

5. Tronçonneuse-fendeuse selon l'une quelconque des revendications 1 à 4, **caractérisée en ce que** le manchon de support supérieur (10) et le manchon de support inférieur (9) sont des rectangles en coupe transversale, dont la largeur correspond à l'épaisseur de la lame de fendage (2), et dont la longueur correspond à la largeur de la lame de fendage dans la direction de déplacement de la bûche fendue.

6. Tronçonneuse-fendeuse selon l'une quelconque des revendications 1 à 5, **caractérisée en ce que** le manchon de support supérieur (10) et le manchon de support inférieur (9) comprennent une surface de support arrière (13) qui reçoit la force de pression d'un piston de fendage appliquée sur la lame de fendage pendant le fendage de la bûche.

7. Tronçonneuse-fendeuse selon l'une quelconque des revendications 1 à 6, **caractérisée en ce que** le manchon de support supérieur (10) et le manchon de support inférieur (9) comprennent des surfaces de support latérales (14) qui reçoivent les forces transversales et de rotation appliquées sur la lame de fendage (2).
